# EUROPEAN PATENT SPECIFICATION

(11) **EP 3 292 231 B1**
(45) Date of publication and mention of the grant of the patent: **24.02.2021**
(21) Application number: 16726983.6
(22) Date of filing: 06.05.2016
(51) Int. Cl.: C25B 3/04, C25B 1/00, C25B 1/04, C25B 11/04, H01M 8/06

(54) **ELECTROCHEMICAL REDUCTION OF CARBON DIOXIDE IN AQUEOUS IONIC LIQUID CONTAINING ELECTROLYTES**
ELEKTROCHEMISCHE REDUKTION VON KOHLENDIOXID IN WÄSSRIGEN IONISCHEN FLÜSSIGKEITEN MIT ELEKTROLYTEN
RÉDUCTION ÉLECTROCHIMIQUE DU DIOXYDE DE CARBONE DANS UN LIQUIDE IONIQUE AQUEUX CONTENANT DES ÉLECTROLYTES

(30) Priority: 06.05.2015 PT 10844215; 23.02.2016 PT 10918816
(43) Date of publication of application: 14.03.2018
(73) Proprietor: Omnidea, Lda., 3510-017 Viseu (PT)
(72) Inventor: DA COSTA DUARTE PARDAL, Tiago, 1825-114 Caparica (PT); STAACK REIS-MACHADO, Ana Maria, 1170-097 Lisboa (PT); PEREIRA MESSIAS, Sofia Alexandra, 2860-599 Moita (PT); BUCHO NUNES DE SOUSA, Margarida, 2800-172 Almada (PT); REI FERNANDES, Tomás Cláudio, 1495-144 Algés (PT); DA COSTA FRANCO AFONSO, Joana, 2710-055 Sintra (PT); DE MAGALHÃES NUNES-DA-PONTE, Manuel Luís, 1495-682 Cruz Quebrada-Dafundo (PT); PETROVSKI, Zeljko, 2829-516 Caparica (PT); DA SILVA NUNES GOMES, Daniela, 2735-377 Agualva-Cacém (PT); FERRÃO DE PAIVA MARTINS, Rodrigo, 2820-292 Charneca da Caparica (PT); RANGEL ARCHILA, Carmen Mireya, 2795-125 Linda-A-Velha (PT)
(74) Representative: do Nascimento Gomes, Rui
(86) International application number: PCT/PT2016/000002
(87) International publication number: WO 2016/178590

(56) References cited:
- WO-A1-2012/015921
- WO-A1-2012/015921
- CN-A- 104 001 540
- US-A1- 2013 023 404
- US-A1- 2014 093 799
- AKIHIRO KATOH ET AL: "Design of Electrocatalyst for CO2 Reduction V. Effect of the Microcrystalline Structures of Cu-Sn and Cu-Zn Alloys on the Electrocatalysis of CO2 Reduction", J. ELECTROCHEM. SOC., vol. 141, no. 8, 1 August 1994 (1994-08-01), pages 2054-2058, XP055561979, DOI: 10.1149/1.2055059
- B. A. ROSEN ET AL: "Ionic Liquid-Mediated Selective Conversion of CO2 to CO at Low Overpotentials", SCIENCE, vol. 334, no. 6056, 4 November 2011 (2011-11-04), pages 643-644, XP055117032, ISSN: 0036-8075, DOI: 10.1126/science.1209786
- JOHN D. WATKINS ET AL: "Direct Reduction of Carbon Dioxide to Formate in High-Gas-Capacity Ionic Liquids at Post-Transition-Metal Electrodes", CHEMSUSCHEM, vol. 7, no. 1, 7 November 2013 (2013-11-07), pages 284-290, XP055283865, DE ISSN: 1864-5631, DOI: 10.1002/cssc.201300659
- ZHOU FENG ET AL: "Highly selective electrocatalytic reduction of carbon dioxide to carbon monoxide on silver electrode with aqueous ionic liquids", ELECTROCHEMISTRY COMMUNICATIONS, ELSEVIER, AMSTERDAM, NL, vol. 46, 3 July 2014 (2014-07-03), pages 103-106, XP029014339, ISSN: 1388-2481, DOI: 10.1016/J.ELECOM.2014.06.023
- AKIHIRO KATOH ET AL: "Design of Electrocatalyst for CO2 Reduction V. Effect of the Microcrystalline Structures of Cu-Sn and Cu-Zn Alloys on the Electrocatalysis of CO2 Reduction", J. ELECTROCHEM. SOC., vol. 141, no. 8, 1 August 1994 (1994-08-01), pages 2054-2058, XP055561979, DOI: 10.1149/1.2055059

## Description

### Technical Field

The present invention relates to a catalytic system for electrochemical reduction of CO₂ to syngas. The catalytic system comprises a catalytic cathode coupled to an ionic liquid-based electrolyte containing water and dissolved CO₂.

### Background Art

The continuous increase of the concentration of carbon dioxide in the atmosphere, the growing consensus that this increase leads to climate changes, and stricter regulations concerning the utilization of fossil fuels, is a strong motivation for the development of technologies for the conversion of carbon dioxide into fuels and chemicals of low carbon footprint, that allow for the establishment of an economy, based on a neutral carbon cycle

In this context, to promote the utilization of carbon dioxide as a raw-material, e.g for the production of fuels both liquid and gaseous, it is necessary to go beyond the state-of-the art to solve the problem of the dependence upon current synthesis processes for fossil fuels, or processes using biomass as raw-materials that imply an heavy burden on natural resources

A fuel that can be produced from CO₂ and water is syngas This gaseous mixture consists primarily of hydrogen, carbon monoxide and some carbon dioxide It has approximately half of the energetic density of natural gas.

in the nineteenth century, coat gasification was used to supply most of the syngas, that was used for illumination and heating. In the twentieth century, syngas started to be used for the synthesis of fuels and chemicals,

Many of the processes for the conversion of syngas were developed in Germany during both world wars, when natural resources were scarce and alternatives were necessary for the production of fuels for transportation, for the production of hydrogen and ammonia. With the development of the oil industry during the 40s of the twentieth century, due to the low cost-effectiveness of the synthesis processes that use syngas as raw-material, these processes were replaced by oil-based processes. However hydrogen, methanol and ammonia are still produced from syngas using similar processes and are the major syngas utilizations Besides the aforementioned applications of syngas, carbon monoxide by itself is useful for the synthesis of methanol acetic acid and plastics Carbon monoxide is used in the chemical synthesis of several products including pharmaceutical products, in which their synthesis involves carbonylation and hydroformylation reactions. Moreover it can be reacted with water through the water gas shift reaction (WGS) to produce hydrogen, It has been forecasted that the world demand for carbon monoxide will increase with the development of the so called C1 chemistry Thus, syngas composed mainly of CO and small quantities of hydrogen (i.e. low H₂/CO ratios) may also be used in such applications.

The oil embargo in the seventies of the last century made clear the energetic dependence of many European countries, and of the United States of America on oil imports This contributed to a renewed interest in syngas conversion technologies

In principle, syngas can be produced from any raw-material containing hydrocarbons including natural gas, naphtha, residual oil, petcoke, coal and biomass

Economic reasons dictate the use of natural gas as the hydrocarbon source for the production of liquid fuels from syngas However, the costs of syngas production amounts to more than half of the capital cost of an industrial gas-tiquid facility, The choice of the technology for the production of syngas also depends on the scale of production The use of solid fuels to produce syngas mav need an even higher investment cost due to increased costs of raw-material handling and more complex syngas purification operations.

Gasification of coal, and natural gas reforming are considered mature technologies for syngas production However, they are highly pollutant in terms of greenhouse-gas emissions, mainly in terms of carbon dioxide emissions Natural-gas reforming is considered cleaner than coal gasification, but industrial facilities have higher processing and maintenance costs They need expensive catalysts that are poisoned easily and need to be regularly regenerated. Therefore there is a need for cost-effective and environmental friendly technology for syngas production.

Other very interesting fuels that can be obtained directly from CO₂ reduction are lower chain alcohols, because they have high energy densities For example, methanol, ethanol and 2-propanol all have quite high energy densities of 6.09, 8.00 and 8.58 kW h kg⁻¹, respectively, and are comparable to hydrocarbons and gasoline, which have energy densities of 10 and 11 kW h kg⁻¹, respectively (YH. Chu , YG, Shul., International Journal of Hydrogen Energy 2010,35 11261e70) For example, ethanol can be produced directly from syngas, but it is typically indirectly produced by methanol homologation However, this pathway is economically unfavorable, when compared to ethanol produced from biomass Thus, currently most of the ethanol is produced in high temperature fermentation facilities that chemically convert corn, sugar-cane and other plants into liquid fuels Nevertheless, crops for biofuels need thousand of hectares of land and high amounts of fertilizers and water Thus, there is a need for cost-effective and sustainable environmentally friendly technologies for alcohol production, in particular for ethanol Ketones can be obtained from CO₂ reduction and are also economically significant products. For instance, acetone is produced mainly for use as a solvent for the production of methyl methacrylate and bisphenol A and is also synthesized from fossil fuel derived products About 6,7 million tonnes were produced worldwide in 2010 (World Petrochemicals report, January 2010), Butanone is also used as a solvent, and as a plastic welding agent.

Several processes for CO₂ dissociation are being actively investigated These processes include thermolysis, thermochemical cycles, electrochemical reduction and photo-reduction. These technologies may be classified as high temperature technologies (temperatures typically higher than 600°C, such as in thermolysis, and thermochemical cycles) and low temperature technologies Technologies that use high temperature to dissociate CO₂, although favored thermodynamically and promoting faster reaction kinetics, pose difficult problems of heat management. Materials for reactors must comply with tight requirements and are generally expensive One of the consequences of high temperature operation is decreased life time of equipment and may lead to degradation of electrode structure through sintering and agglomeration.

It is a goal of the present invention to make available a technology based on low temperature electrochemical reduction Under the scope of the present invention by low temperature is understood the range from room temperature up to 100°C

Electrochemical reduction of CO₂ is an attractive technology from the point of view of its simplicity The reduction is carried out in a single step, and reaction products may be liberated separately in the cathodic compartment and in the anodic compartment of the electrochemical cell. This type of technology is ideal for mass production and for automatized maintenance.

State-of the an electrochemical processes still present several limitations that have prevented its utilization at an industrial scale. The parameters that determine the industrial applicability of this type of process are (i) faradaic efficiency, a measure of the selectivity of the process for a certain product, (ii) current density, that is a measure of conversion rate, (iii) energetic efficiency that is a measure of the energy that is consumed for transformation into a certain product, (iv) catalytic stability and (v) process costs. For CO₂ electrochemical reduction to be applied industrially, the first four parameters must be simultaneously high, whilst the fifth should be low

There are several review articles about electrochemical reduction of CO₂ (J Jones, G, K. S Prakash, and G. A. Olah, Isr. J. Chem, 2014 54, 1451 1466, Huei-Ru "Molly" Jhong, Sichao Ma. Paul JA Kenis, Current Opinion in Chemical Engineering. Volume 2, Issue 2. May 2013. 191-199, ISSN 2211-3398, Gattrell. M; Gupta, N; CO. A. J Electroanal Chem 2006, 594, 1-19; M. Jitaru, D. A. Lowy, M Toma, B C. Toma, L. Oniciu, J. Applied Electrochem, 27 (1997. 875-889). In particular, Gattrell et al. have carried out a review of the several parameters that influence this reaction, such as potential, local concentration of CO₂, nature and buffer concentration, pH, agitation, temperature, pressure, surface features of electrodes. In electrochemical reduction of CO₂ in aqueous electrolytes, hydrogen evolution competes with CO₂ reduction. Thus, hydrogen suppression is very important, because energy supplied is wasted in undesired hydrogen evolution and not utilized for CO₂ reduction In aqueous electrolytes it was observed that CO₂ could be reduced to organic oxygenated molecules Ethanol was produced by electrochemical reduction of CO₂ in conventional aqueous electrolytes on copper with very low faradaic efficiencies of ca 6% at room-temperature, atmospheric pressure and at - 1,44V vs. SHE, (Hori, Y. In Mod. Aspect. Electroc., eds C Vayenas et al. Springer, New York, 2008. 42, 89-189) Recent observations have shown, that copper can catalyze CO₂ conversion into 16 different products (K. P Kuhl, E. R. Cave, D N Abram, T F. Jaramillo, Energy Environ. Sci 2012, 5, 7050) The origin of many of these products remains largely unclear, but as emphasized by many authors they occur in very small quantities (R. Kortlever, J. Shen, K. J. P. Schouten, F. Calle-Vallejo, and M. T M. Koper J. Phys Chem Lett 2015, 6, 4073-4082). Cu-Ag alloys were found to yield ethanol with Faradaic efficiencies not higher than ca 26% in R hours pulsed electrolysis, with an anodic bias of *V*a =-0.4V and a cathodic bias of *V*c =- 2.0 V *vs.* Ag/AgCl and current densities below 1mA/cm² (S. Ishimaru, R. Shiratsuchi, and G. Nogami, Journal of The Electrochemical Society, 2000, 147 (5) 1864-1867) Ali et al (I. Ali, N. Ullah and S. Omanovic, Int J. Electrochem Sci.. 9, 7198 - 7205, 2014) investigated electrochemical reduction of CO₂ in an aqueous electrolyte (Briton Robinson buffer, pH=5,82) employing a glassy carbon electrode patterned with nickel nanoparticles (GC-Ni) The major product obtained was ethanol with small quantities of methanol, acetone and acetaldehyde After 8 hours of electrolysis at a constant potential of -1,7 V *vs* mercury/mercurous sulphate electrode (MSE;+ 0,642V vs. SHE). 22°C and atmospheric pressure the concentration of ethanol in the electrolyte was 574±3 mg/L. Ullah *et al.* (N Ullah, L. Ali, M. Jansen and S. Omanovic, The Canadian J of Chem Eng., 93, 55-62, 2015) using the same experimental set-up, but an Ir/Ru-oxide coating deposited on a titanium substrate, as an electrode obtained also as major product ethanol with small quantities of methanol, acetone and acetaldehyde. A Faradaic efficiency of 85% was obtained at a temperature of 22°C and a Faradaic efficiency of 96% was obtained at 4°C at a potential of -1.7 V *vs.* MSE. After 8 hours of electrolysis a concentration of ethanol of 1027 mg/L. of ethanol in the electrolyte was reached.

Jitaru *et al.* reviewed electrochemical reduction of CO₂ in organic electrolytes (M. Jitaru. D. A. Lowy, M. Toma, B. C. Toma, L. Oniciu, J. Applied Electrochem, 27 (1997) 875-889) These studies take advantage of the higher CO₂ solubility in organic solvents than in water. Higher Faradaic efficiencies were observed in the system Cu-MeOH than in water, however due to the lower ionic conductivities of organic solvents, significant ohmic losses occur, leading to an energetically inefficient system

One strategy that has been used to overcome mass transfer limitations, caused by low CO₂ solubility in water, and the consequent low availability of CO₂ to be reduced at the surface of the electrode is the use of high-pressure CO₂ High-pressure was found to dramatically influence the activity and selectivity of the induction reaction (K. Hara, A.Tsuneto. A Kdo, T Sakata, J. Electrochem Soc. 141 (8) (1994) 2097) As expected, higher reduction current densities were obtained, when compared to the ones obtained at atmospheric pressure.

Another class of organic solvents, room temperature ionic liquids (IL) have been proposed as electrolytes for electrochemical reduction of CO₂. due to their wide electrochemical windows, high solubility for CO₂ and reasonably good intrinsic ionic conductivities (G. Zhao, T. Jiang, B. Han, Z. Li, J. Zhang, Z. Liu, J. He, W. Wu, J. of Supercritical Fluids. 2004 32, 287 -291) Room temperature ionic liquids are generally defined as organic salts that are liquid at temperatures below 100°C The possibility of ionic liquids to absorb CO₂ both physically (L A Blanchard. D. Hancu, E.J. Beckman, J.F. Brennecke, 1999, Nature 399. 28-29) and chemically (L. E Barrosse-Antle and R G. Compton, Chem Commun, 2009, 3744-3746) opens the possibility to capture CO₂ and convert it simultaneously into valuable chemical products. In the seminal work of Zhao et al. (G. Zhao, T. Jiang. B. Han, Z. Li, J. Zhang, Z. Liu, J He, W Wu, J. of Supercritical Fluids, 2004. 32, 287-291) supercritical CO₂ and water were electrolysed at a copper cathode in the hydrophobic ionic liquid, 1-N-butyl-3-methytimidazolium hexafluorophosphate (BMIMPF₆), using a platinum anode. The electrolysis products detected were CO, H₂, and trace amounts of formic acid However, large overpotentials, were required for carrying out electrochemical reduction. Rosen et al. (B A Rosen, A. Salehi-Khojin, M. R. Thorson, W. Zhu. D. T. Whipple, P. J. A. Kenis, R. I. Masel, Science, 2011, 334, 643-644) used a silver working electrode to reduce CO₂ to CO at atmospheric pressure in a hydrated IL 1-ethyl-3-methylimidazolium tetrafluoroborate (EMIMBF4), where water was the proton source at overpotentials as low as 0.2V with Faradaic efficiencies higher than 96% This study proposes that the ionic liquid lowers the energy of the [CO₂]⁻ intermediate thereby decreasing the initial barrier to reduction Patent application WO2012/17792A2 claims electrochemical sensors to measure quantities or CO₂ concentrations These sensors consist of electrochemical cells that convert carbon dioxide in another substance, when a sufficient voltage is applied. One of the reactions that the sensor can use to measure amounts/concentrations of CO₂ is the reduction of CO₂ to carbon monoxide. However this document is not relevant to the invention, since the technological requirements for a sensor with these characteristics are quite different from the requirements that an industrial process must comply with in terms of current densities and energetic efficiencies These sensors utilize typically a metallic cathode and an electrolyte that can be comprised of an ionic liquid. The innovative catalytic system of the present invention is not disclosed in this document. Di Meglio *et al.* (J. L. DiMeglio and J. Rosenthal, J. Am. Chem. Soc., 2013, 135, 8798-8801, WO2014/161262A1) have reported that an economical bismuth-based material could promote the electrochemical conversion of CO₂ to CO at overpotentials below 0,2 V operating with a Faradaic efficiency of approximately 95% in CO₂ saturated acetonitrile containing millimolar concentrations of a 1,3-dialkyl substituted imidazolium based ionic liquid promoter such as 1-butyl-3-methylimidazolium triflate ((BMIM)OTf). In a further study, Medina-Ramos *et al*. (J. Medina-Ramos, R. C. Pupillo, T. P. Keane, J. L. DiMeglio, J Rosenthal, J. Am. Chem. Soc., Just Accepted Manuscript • DOI 10.1021/ja5121088 • Publication Date (Web) 19 Feb 2015) showed that electrochemically prepared Bi and Sn catalysts were highly active, selective and robust platforms for CO evolution, with partial current densities of 5-8 mA/cm² at applied overpotentials <0.25 V in the presence of (BMIM)OTf in acetonitrile solutions By contrast, the electrodeposited Pb and Sb catalysts do not promote rapid CO generation with the same level of selectivity The Pb-material is only approximately 10% as active as the Sn and Bi systems at an applied potential of -1.95 V and is rapidly passivated during catalysis. Watkins *et al.* (J. D. Watkins and A. B. Bocarsly, ChemSusChem 2014, 7, 284 290, DOI 10 1002/cssc.201300659) used an aqueous solution of 1-ethyl-3-methylimidazolium trifluoruacetate (EMIMTFA) for the direct reduction of carbon dioxide into formate at indium, tin, and lead electrodes, yields of ca 3 mgh⁻¹cm⁻² were obtained Product selectivity was observed upon changing the IL anion. In EMIM based ILs on Pb electrodes oxalate formation is favoured in the presence of (NTF₂), whereas formate formation is favoured when TFA is used as refered to above (L Sun, G K Ramesha, P. V. Kamat and J. F. Brennecke, Langmuir, 30, 6302-6308, 2014). Barrosse-Antle *et al*. (L. E Barrosse-Antle and R G Compton. Chem Commun., 2009, 3744-3746) studied CO₂ electrochemical reduction in 1-butyl-3-ethylimidazolium acetate observing that CO₂ electrochemical reduction was not sustainable, because CO₂ is almost irreversibly chemically absorbed. Hollingsworth *et al.* (N. Hollingsworth, S. F. R. Taylor, M T. Galante, J. Jacquemin, C. Longo, K B. Holt, N. H. deLeeuwad and C Hardacre, Faraday Diseuss, 2015, 183, 389 2015) used hydrated (0.7 molL⁻¹ H₂O) 0.1 molL⁻¹ trihexyltetradecylphosphonium 1,2,4-triazolide, [P66614][124Triz] in acetonitrile to reduce CO₂ at Ag, Au and Pt electrodes. This ionic liquid has been shown to chemisorb CO₂ through equimolar binding of the carbon dioxide with the 1,2,4,triazolide anion (C. Wang, X Luo, H Luo, D. Jiang, H. Li and S Dai, Angew. Chem, Int. Ed., 2011, 50, 4918-4922; S Seo, M A DeSilva and J. F. Brennecke, J Phys. Chem B, 2014, 118, 14870-14879) These systems were shown to favour formate formation from chemically bound CO₂ Formate was produced by a lower energy route at -0 7 V vs. Ag/AgNO₃ with 95% Faradaic efficiency on Ag electrodes.

Another alternative to overcome mass transfer limitations caused by low CO₂ solubility in water and consequently of the low availability of CO₂ to be reduced at the surface of the electrode is the use of gas diffusion electrodes (Wenzhen, Li, In Advances in CO2 Conversion and Utilization; Hu, Y, ACS Symposium Series; American Chemical Society. Washington, DC. 2010, 55-76). Gas diffusion electrodes (GDE) are composite porous electrodes consisting of a catalytic layer and a porous layer for gas diffusion. The use of these systems has allowed the conversion of CO₂ into syngas (H₂+CO) and formic acid with reasonable energetic efficiencies (32-47%) and current densities of 20-100 mA cm⁻² (Wenzhen, Li., In Advances in CO2 Conversion and Utilization; Hu, Y. ACS Symposium Series; American Chemical Society Washington, DC, 2010, 55-76, Yamamoto. T, Tryk, D A, Fujishima A; Ohata H. Electrochimica Acta 2002, 47, 3327-3334; Mahmood M. N, Masheder D; Harty C J. J Applied Electrochemistry 1097, 17 1159-1170). These electrodes, however exhibit fast deactivation and consequently short lifetimes, moreover they use platinum, an expensive noble metal, Electro-catalytic conversion of CO₂ using GDE electrodes in conventional aqueous electrolytes was found to convert CO₂ into small molecules of liquid organic oxygenates, such as methanol, acetone, isopropanol, methyl acetate (F. Martinez, C. Jimenez, J Garcia, R Camarillo, J. Rincon, Environmental Engineering and Management Journal 2014, vol 13, 10,2477-2485) and longer chain oxygenates C ≥4 in very small amounts has been reported (G. Centi., S. Perathoner, Wine, G, M Gangeri, Green Chem 2007, 9, 671-678; M. Gangeri, S Perathoner, S. Caudo, G. Centi, J. Amadou, D Begin, C, Pham-Huu, M J Ledoux, J. P. Tessonnier, D. S. Su, R Schlogl, Catal Today 2009, 143,57).

US 2014/0093799 A1 discloses devices and processes for carbon dioxide conversion.

### Disclosure of the Invention

Electrochemical reduction reactions of carbon dioxide can be written as multiple proton-electron reactions leading to several products and water

k CO₂+n H⁺+ ne⁻→P+mH₂O (1)

Without wishingto be bound by theory, the present invention uses reactions of the type illustrated by reactions (1-4) coupled to water electrolysis to produce the aforementioned chemical products at the cathode

Reaction 2 yields syngas

2CO₂+6H⁻+6e⁻→2CO+H₂+2H₂O (2)

Reaction 3 exemplifies the formation of alcohols giving ethanol as example

2CO₂+12H⁺+12e⁻→C₂H₃OH+3H₂O (3)

Reaction 4 exemplifies the formation of ketones giving acetone as example

2CO₂+CO+14H⁻+14e⁺→CH₃COH₃+4H₂O (4)

According to Chandrasekaran *et al* (K. Chandrasekaran, J. O M Bockris, Surf, Sci, 185, 495-514 (1987)), the first step in CO₂ reduction, is the formation of the radical anion CO₂, and therefore, this reaction, needs a very negative potential (-1.9V vs, SHE in water at 25°C, pH 7) to occur, when the solvent is water, or in most of organic solvents. Therefore, the energy required for the process is usually high, and the current energy efficiency as well as yield of the desired product are generally low (Gattrell, M, Gupta, N, CO, A J Electroanal, Chem, 2006, 594, 1-19). To solve the problems of the state-of-the art it is necessary to have electrochemical catalysts that are able to reduce the overpotentials observed typically in electrochemical reduction technology. It is not only the chemical composition nf the catalytic cathodes that is important, but also their structure to optimize the transport processes of the reagents to the catalytic sites on the surface of the electrode, transport of reaction products from the surface of the electrode to the bulk liquid or gaseous phase and to allow an efficient electron conduction. It is well known since the sixties of the twenty century that electrolyte composition drastically influences electrochemical processes (A, N, Frumkin, Trans Faraday Soc 1959, 55.156-167).

The present inventors have carried out extensive research to develop a catalytic system that could convert CO₂ into syngas with yields and selectivities that allow industrial applicability Generally described, this catalytic system comprises a catalytic cathode and an electrolyte, in which the component(s) of the electrolyte allow the stabilization of the intermediary species in electrochemical reduction of CO₂, thereby achieving a reduction of the activation energy of the reactions i.e in the overpotential.

In the present application the term "Faradaic efficiency" or "Faradic efficiency" is to be understood as the fraction of current applied to the cell that is used in the production of the desired product Normalized efficiencies for gaseous products are defined as the partial current for a gaseous product divided by the summation of the partial current of each of the gaseous products formed Normalized efficiencies for liquid products are defined as the partial current for a liquid product divided by the summation of the partial current of each of the gaseous products formed.

The term "overpotential" when used herein is to be understood as the difference between thermodynamic equilibrium potential for a certain reduction or oxidation reaction and the potential at which the reaction is observed experimentally.

The term "cathodic overpotential", when used herein is to be understood as the cathode overpotential in an electrochemical cell.

The term "ionic liquid, or room temperature ionic liquid" when used herein is to be understood as salts, or ionic compounds which form stable liquids at temperatures lower than 100°C.

The term "deep eutectic solvents" when used herein is to be understood as an ionic liquid that comprises a mixture forming an eutectic with a melting point lower than the melting points of the individual components.

The term "regenerative system" when used herein is to be understood as an electrolyser or fuel cell that can be run in reverse mode. The electrolyser/fuel cell when run in the direct, or reverse mode may use the same or different electrodes. Alternatively the system can be composed of an electrolyser plus a fuel cell.

An analysis of the aforementioned state-of-the art shows, that the amount of alcohols and acetone produced by electrochemical reduction of CO₂ in conventional aqueous electrolytes are minimal, when compared, for example, with gaseous reduction products, such as CO and hydrocarbons.

As referred above, the use of organic solvents did not solve the state-of-fhe an problems either. Reaction selectivities are low, yielding mixtures of CO. formates, oxalates, glyoxalates with Faradaic efficiencies for CO being very modest. These systems are also energetically inefficient, as the low conductivities of these solvents require that high overpotentials need to be employed to promote CO₂ reduction to CO. Studies that use ionic liquids as electrolyte illustrate the main problems of the process: low diffusion coefficients of CO₂ and the high viscosities of ionic liquids may drastically influence process conversions To our knowledge there are no reports of electrochemical conversion of CO₂ into alcohols, or ketones in electrolytes comprising ionic liquids. However, ionic liquids offer the potential of circumventing the problem of choosing between electrolytes with a low solubility for CO₂, or electrolytes with low ionic conductivity, such as the conventional organic solvents.

The present invention relates to a catalytic system for electrochemical reduction of CO₂ comprising:
a. a bimetallic zinc-copper cathode with an atomic percentage of zinc in the range of 28% to 97%,
   the bimetallic cathode further optionally further comprising metallic and/or non-metallic additives in atomic percentages equal or less than 1%, wherein the metallic and/or non-metallic additives are selected from Sn, Fe, Pb, their oxides, copper oxides, zinc oxides, Si, C and their mixtures, and
   where copper and zinc are present in the cathode in the form of solid solution, alloy or particles, including nanoparticles supported on an electric conducting material, wherein the nanoparticles are nanoparticles of Cu₅Zn₈, CuZn₂ and their mixtures with nanoparticles of pure copper and/or nanoparticles of pure zinc,
b. a hydrophilic ionic liquid-based electrolyte containing water and dissolved CO₂ forming a single phase, in which the molar fraction of ionic liquid lies in the range 0.1-0.6, wherein said ionic liquid consists of cations selected from imidazolium, pyridinium, pyrrolidinium, phosphonium, ammonium, sulfonium, cholines and acetyl cholines, and the anions that are present combined with these cations are selected from tetrafluoroborate, chloride, bromide, iodine, methanesulfonate, acetate, formiate, trifluoroacetate and triflate,
   the ionic liquid-based electrolyte optionally further comprising an organic additive, and the ionic liquid-based electrolyte being coupled to said bimetallic zinc-copper cathode, and
wherein the catalytic system is configured to produce syngas with a cathodic overpotential in the range of 0.1 V - 0.7 V at temperatures between room temperature and 100 °C, and pressures between atmospheric pressure and 100 bar.>

The process according to the invention may be carried out by applying a potential more positive then the reduction potential of the compounds to be produced at the cathode. The process can be carried out in continuous, semi-continuous, or in batch mode.

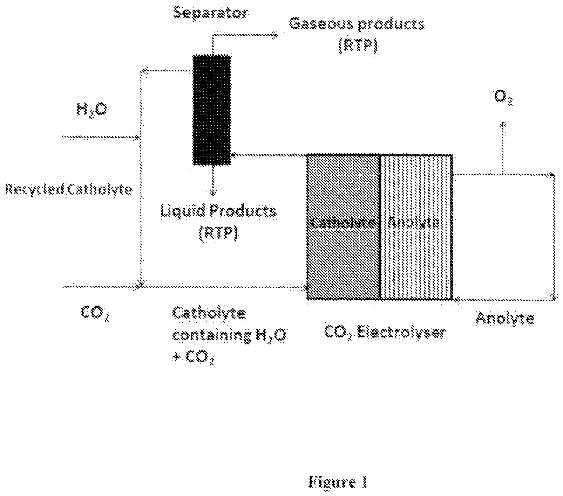

Figure 1 presents a simplified schematic of the process for the production of chemical products by electrochemical reduction of CO₂.

Carbon dioxide dissolved in the electrolyte containing ionic liquid, water and eventual additives is reduced at the catalytic cathode to yield liquid and gaseous products at room temperature and pressure (RTP). The liquid products (RTP) are purified in the separator depicted in Figure 1. The liquid products resulting from the process arc C₁-C₁₀- alcohols and ketones up to four carbon atoms, such as methanol, ethanol, propanol, isopropanol, butanol, hexanol, octanol. decanol, or their isomers, acetone, butanone etc The gaseous product resulting from the electrolysis is syngas The selectivity of the electrochemical reduction of CO₂ can be controlled by the choice of the catalytic cathode composition, electrolyte composition, temperature, pressure, current-potential applied.

An analysis of the aforementioned slate-of-the-art also shows that there are few metals that can catalyze the reduction of carbon dioxide to carbon monoxide and consequently to syngas. In aqueous solvents due to the competition of the hydrogen evolution reaction, only noble metals catalyze this reaction with Faradic efficiencies higher than 80% The high price of these materials coupled to the low current densities exhibited by the aqueous systems make an industrial application hardly practicable. Moreover the metallic cathodes suffer from corrosion and passivation problems in long duration electrolysis needing to be periodically replaced. Thus, cathodes made up of lower cost materials are highly desirable.

Bearing in mind these facts the present inventors have carried out extensive research of the catalytic properties of common metals, such as copper and zinc coupled to electrolytes with specific compositions to solve the problems of the state-of-the-art As aforementioned copper in aqueous solution gives rise to a mixture of gases and liquid products including methane, formic acid, ethylene and ethanol with low conversions and low energetic efficiencies In the seminal work of Hori et al (Y.Hori, H. Wakebe, T, T Tsukamoto, O. Koga, Electrohim Acta 1994, 39, 1833) were reported high Faradaic efficiencies of 80% for the reduction of CO₂ to CO with the formation of small amounts of formic acid (Faradaic efficiency of 6%) for a zinc electrode in a 0 05 M K₂SO₄ electrolyte However, low current densities were obtained and the high dissolution rate of zinc in the electrolytes made an industrial application unfeasible. Katoh et al (A. Katoh, H Uchida, M Shibata e M. Watanabe J. Electrochem. Soc., 1994, 141, 8, 2054-2058) studied the influence of zinc-copper alloys in the range 23-96 at % in the electrochemical reduction of CO₂ using as electrolyte in the potential range from -0,5 V to -1.5 V vs. SHE (standard hydrogen electrode). These alloys were obtained by electrodeposition in conventional cyanide plating baths. In this potential range CO, HCOOH and H₂ were the only products detected resulting from the electrolysis A maximum of 80% of Faradaic efficiency for the production of CO was observed for the composition of Zn Cu (58 42) atomic % corresponding to the phase Cu₅Zn₈, but the current densities ca 1 mA/cm² were too low for an industrial application It was also observed that the reversibility of all alloys studied were worse than for pure copper, or pure zinc High overpotentials ca. 1 V had to be applied, due to the low reversibility of the reaction.

The patent application of Sivasankar et al WO2012/015921A1 aims at protecting a syngas production process that uses catalytic systems very different from the catalytic system of the present invention. The electrolyte is water with a supporting salt that is not an ionic liquid Thus is not an ionic liquid based-electrolyte as in the present invention. This application aims also at protecting the use of cathodes made of copper alloys in the referred process. However a synergic effect between copper and zinc and the electrolyte of the present invention is not described It is given as example Faradaic efficiencies of electrolyses carried out in an electrolyte consisting of an aqucous solution of 0,5M KCl with 10 mM pyridine as catalyst with cathodes made of two brass alloys For one of the alloys brass 260 corresponding to a composition of ZnCu (30 70) atomic % the Faradaic efficiencies are 0% for CO and ca. 42% for hydrogen Thus, for these compositions CO₂ is not reduced to CO and syngas is not produced. It is also given as an example, a cathode made of brass alloy 460. which corresponds to a composition of ca Zn Cu (40.60) % at containing, eventually Sn, Fe and Ph in a content lower than 1%, that yields Faradaic efficiencies of 5% for CO and ca. 18% for hydrogen i.e. a selectivity for syngas of only 23% For an extremely high number of materials that may constitute the cathode, surely of the order of magnitude of several thousands of combinations is referred that half-cell potentials are within the range of -0,5 V to -1,3 V vs SHE. Considering that the thermodynamic equilibrium potential of CO2 reduction to CO is -0,1 V *vs*. SHE. and that the thermodynamic equilibrium potential of proton reduction to hydrogen is 0 *vs.* SHE the cathodic overpotential can vary with the range from 0.4V to 1,2 V vs. SHE.

Surprisingly, the present inventors observed a synergic effect in a catalytic system consisting of a catalytic cathode comprising an association between the catalytic cathode made-up of copper and zinc with an atomic percentage of zinc ≥ 28% and ≤ 97% coupled to an ionic liquid base-electrolyte containing water in which the mole fraction of the ionic liquid is present in the range 0,1-0,6 and eventually an organic additive, characterized by an overpotential in the range 0,1 V to 0,7, near an ideally reversible system significantly lower than the overpotential reported in the literature, that allows to solve the state-of-the art problems. This synergic effect is neither described nor could be anticipated by a person skilled in the art based in the results available in the literature.

The catalytic cathode consists essentially in copper and zinc and eventually metallic and/or non-metallic additives in atomic percentages equal to or less than 1% generally used in commercial metallic materials, or impurities that result from their production processes, such as Sn, Fe, Pb, their oxides copper oxides, zinc oxides. Si, C and their mixtures

The catalytic cathodes containing copper, and zinc may be prepared by the state-of-the art processes, such as for example metallurgic processes electro-deposition in conventional plating baths, or ionic liquids including deep eutectic solvents. The electrode materials may be present in the form of metallic foils, meshes, foams, solid solution, alloy, particles, including nanoparticles supported on an electrically conducting material These nanoparticles may be Cu₅Zn₈, CuZn₂, or their mixtures with nanoparticles of pure copper and/or pure zinc,

The present invention also relates to a catalytic system for the reduction of syngas, in which it is possible to tune the ratio between hydrogen and carbon monoxide. The tuning can be carried out, for example, by modifying the ratio between the copper and zinc constituents of the cathode, electrolyte composition, applied current/potential, working pressure and/or temperature of the electrochemical reactor This catalytic system comprises a zinc-copper based-cathode with a zinc atomic percentage equal or higher than 28% and equal or lower than 58%, coupled to an ionic liquid-based electrolyte containing water in which the mole fraction of ionic liquid is in the range of 0,1-0,6 and eventually organic additives characterized by being able to produce syngas in a molar proportion H₂/CO in the range of 3 to 0.5, in which the sum of the gaseous products hydrogen and carbon monoxide are higher than 95%, with cathodic overpotentials in the range of 0,1 V to 0,7 V.

Another aspect of the invention relates to a catalytic cathode comprising zinc and copper with an atomic percentage of zinc equal or higher than 58% and equal or lower than 97%, coupled to an ionic liquid-based electrolyte containing water in which the mole fraction of tonic liquid is in the range of 0,1-0,6 and eventually organic additives, characterized by being able to produce syngas in a molar proportion H₂/CO in the range of 0.03 to 0 1, in which the sum of the gaseous products hydrogen and carbon monoxide are higher than 95%

In the state-of-the art processes for producing syngas there is not the possibility to tune syngas composition by changing easily tunable process parameters, such as applied current/potential, temperature, pressure, cathode composition and electrolyte composition Syngas composition, mainly the ratio H₂/CO varies as a function of the production technology and raw-material Methane reforming yields a H₂/CO ratio of 3-5, while coal gasification yields H₂/CO ratios near unity or below one (O. J Olusola, A. M. Mesubi, A. C. Tiena, M. Sudip, ChemistryFuel Processing Technology. 2010, 91 136-144. B. Fidalgo and J. A. Menendez In. Syngas Production, Applications and Environmental Impact ISBN 978-1-62100-870-5 Editors. A Indario, J. Palguandi, 2013 Nova Science Publishers, Inc. pp 121-149),

The ionic liquids to be used by the present invention are currently known ionic liquids in which carbon dioxide is soluble, or that will be developed that are cations belonging to the imidazolium family, in particular L3 substituted imidazoliums with the same of different substituents, pyridinium, pyrrolidinium, phosphonium, ammonium, sulphonium, cholines, acetyl cholines, and the anions that may he present combined with these cations may be tetrafluoroborate, chloride, bromide, iodine. metahnesulphonate. acetate, formiate, trifluoroacetate. triflate etc The organic additive may be an organic solvent, such as acetonitrile, dimethylformamide, dimethylsulfoxide, polycarbonates, alkylcarbonates, cyclic carbonates, acetone, metanol, etanol, propanol, butanol, octanol and its isomers, or fluorinated aliphatic alcohols C₁-C₈ and their isomers, polyethylene glycol and mixtures of these compounds and in which said additive is present in the ionic liquid in a concentration less than 20% weight and mote preferentially in a concentration less than 5% weight.

Another advantage of the invention is the capacity of producing syngas at a small scale. Carbon monoxide is an expensive and toxic substance. The capacity to generate only the necessary amounts on demand instead of carrying out stockage will reduce the costs associated to the use of CO utilization and its safety

The process of the present invention to produce syngas from CO₂ is carried out in an electrochemical cell, or in a stack of electrochemical cells. The electrochemical cell comprises the catalytic cathode of the present invention and an anode. The anode may comprise any suitable material known in the state-of-the art, or that will be developed, such as for example iridium oxide, ruthenium oxide, iron oxide, cobalt oxide, a mixed metallic oxide, nickel oxide, or platinum, titanium, or an sacrificial electrode, such as zinc, magnesium, or aluminium. The anode may also he a photoanode, or a microbiological anode.

The electrochemical cell may be an undivided single cell, or the cathode and anode may be placed in different compartments. In the latter case the catholyte and the anolyte may be separated by a porous glass frit, or other type of suitable material, such as a polymeric membrane. The catholyte and the anolyte may be the same or different. The anolyte can be an aqueous solution containing an inorganic acid, such as sulfuric acid, chloridric or phosphoric acid, tetrafluoroboric acid, trifluoroacetic acid, triflic acid, or an ammonium salt, or an ionic liquid. The anolyte may also contain an aqueous solution containing hydroxides, carbonates, or bicarbonates of alkaline or alkaline-earth metals.

The electrochemical cell or stack of cells comprises a source of electricity that powers the electrodes The process according to the invention may be carried out in a continuous, semi-continuous or in batch mode When the process operates at pressures higher than atmospheric pressure and the catholyte compartment is separated from the anolyte compartment, the cell can be pressurized with CO₂ or an inert gas, such as nitrogen, helium, or argon. In this cell, a capillary connecting both compartments, and/or pressure control valves avoid the build-up of a pressure differential between said compartments.

When the selected anodic reaction is water oxidation, and when oxygen is obtained at the anode as a mixture with CO₂ the oxygen may be purified to the desired degree of purity, through an additional purification step Purification may be carried out by adjusting the pressure and temperature of the mixture CO₂-O₂, so that a CO₂ rich phase in the liquid state can be decanted from an oxygen rich gaseous phase Alternatively, another process for oxygen purification may be used, such as a membrane purification method

### Brief Description of the Drawings

Figure 1 depicts a simplified schematic of the process for the production of chemical products by electrochemical reduction of CO₂

### Examples

The following examples are intended to illustrate the invention in more detail, but arc not intended to limit the scope of the invention, in anyway

### Example 1 (not according to the invention)

EMIMOTf (1-ethyt-3-methyl-imidazolium triflate) with a purity ≥99% (RMN) from Iolitec was used as ionic liquid. Demineralized water was added to prepare an electrolyte with a mole fraction of EMIMOTf of 0.4. The electrochemical cell was previously pressurized with CO₂ at 80 bar and 45°C and the electrolyte saturated in CO₂ After applying a potential in the range of - 1,0V a -1.8V vs. Ag/Ag+ to a bimetallic copper-zinc cathode and using a sacrificial zinc anode ethanol and acetone are produced. The Faradaic efficiency for liquid products tat room temperature and pressure) is near 100% Ethanol and acetone are then purified in the separator.

### Example 2

EMIMOTf (1-ethyl-3-methyl-imidazolium triflate) with a purity ≥99% (RMN) from Iolitec was used as ionic liquid Dermineralized water was added to prepare an electrolyte with a mole fraction of EMIMOTf of 0.4. As catalytic cathode, an electro-deposited copper-zinc film Zn :Cu (50.50)% at on a copper foil substrate with 1 cm² geometrical area was used A zinc foil of I cm² geometrical area was used as sacrificial anode A single compartment high-pressure cell was used The electrolyte was saturated with 30 bar CO₂ N45 99.995 purity from Air Liquide After the pressure and temperature were stabilized, electrolysis was carried out potentiostatically at -0.8V vs. SHE, at 45°C and 30 bar CO₂ After electrolysis the resulting gaseous mixture was analyzed by gas chromatography and the molar ratio of H₂/CO determined was 0.8 The normalized Faradaic efficiency in terms of gaseous products H₂ and CO was near 100%

### Example 3

EMIMOTf (1-ethyl-3-methyl-imidazolium triflate) with a purity ≥99% (RMN) from Iolitec was used as ionic liquid. Deminerolized water was added to prepare an electrolyte with a mole fraction of EMIMOTf of 0.4. As catalytic cathode, an electro-deposited copper-zinc film Zn.Cu (80 20)% at. on a copper foil substrate with 1 cm² geometrical area was used A zinc foil of 1 cm² geometrical area was used as sacrificial anode. A single compartment high-pressure cell was used. The electrolyte was saturated with 30 bar CO₂ N45 99 995 purity from Air Liquide After the pressure and temperature were stabilized, electrolysis was carried out potentiostatically at -1.0V vs SHE. at 45°C and 30 bar CO₂ After electrolysis the resulting gaseous mixture was analyzed by gas chromatography and the molar ratio of H₂/CO determined was 0.1. The total Faradaic efficiency for syngas was near 100% and for CO 92%.

### Industrial Applicability

A catalytic system and electrochemical system to produce syngas are provided. Syngas can find use in application such as fuels, gasoline additives, vectors for energy storage, fuel for fuel cells, or in conventional applications as chemical, pharmaceutical and cosmetic products or as raw-materials for the production of other chemical products. It ic also provided a regenerative system comprising the catalytic system of the present invention, that is capable of producing chemical products, and when run in reverse mode electricity.

## Claims

1. Catalytic system for electrochemical reduction of CO₂ comprising:
a. a bimetallic zinc-copper cathode with an atomic percentage of zinc in the range of 28% to 97%,
the bimetallic cathode further optionally further comprising metallic and/or non-metallic additives in atomic percentages equal or less than 1%, wherein the metallic and/or non-metallic additives are selected from Sn, Fe, Pb, their oxides, copper oxides, zinc oxides, Si, C and their mixtures, and
where copper and zinc are present in the cathode in the form of solid solution, alloy or particles, including nanoparticles supported on an electric conducting material, wherein the nanoparticles are nanoparticles of Cu₅Zn₈, CuZn₂ and their mixtures with nanoparticles of pure copper and/or nanoparticles of pure zinc,
b. a hydrophilic ionic liquid-based electrolyte containing water and dissolved CO₂ forming a single phase, in which the molar fraction of ionic liquid lies in the range 0.1-0.6, wherein said ionic liquid consists of cations selected from imidazolium, pyridinium, pyrrolidinium, phosphonium, ammonium, sulfonium, cholines and acetyl cholines, and the anions that are present combined with these cations are selected from tetrafluoroborate, chloride, bromide, iodine, methanesulfonate, acetate, formiate, trifluoroacetate and triflate,
the ionic liquid-based electrolyte optionally further comprising an organic additive, and the ionic liquid-based electrolyte being coupled to said bimetallic zinc-copper cathode, and
wherein the catalytic system is configured to produce syngas with a cathodic overpotential in the range of 0.1 V - 0.7 V at temperatures between room temperature and 100 °C, and pressures between atmospheric pressure and 100 bar.

2. Catalytic system according to claim 1, whereby said catalytic cathode contains zinc and copper with an atomic percentage of zinc equal or higher than 28% and equal or lower than 58%, wherein the system is configured to produce syngas in a molar proportion H₂/CO in the range of 3 to 0.5, in which the sum of the gaseous products hydrogen and carbon monoxide is higher than 95%.

3. Catalytic system according to claim 1, whereby said catalytic cathode contains zinc and copper with an atomic percentage of zinc equal or higher than 58% and equal or lower than 97%, wherein the system is configured to produce syngas in a molar proportion H₂/CO in the range of 0.03 to 0.1, in which the sum of the gaseous products hydrogen and carbon monoxide is higher than 95%.

4. Catalytic system according to claim 1, wherein the imidazolium is 1,3 substituted imidazolium with the same of different substituents.

5. Catalytic system of according to any of the claims 1 to 4, in which the organic additive consists of an organic solvent, such as acetonitrile, dimethylformamide, dimethylsulfoxide, polycarbonates, alkylcarbonates, cyclic carbonates, acetone, methanol, ethanol, propanol, butanol, octanol and its isomers, or fluorinated aliphatic alcohols C₁-C₈ and their isomers, polyethylene glycol and mixtures of these compounds and in which said additive is present in the ionic liquid in a concentration less than 20% weight and more preferentially in a concentration less than 5% weight.

6. High-pressure electrochemical reactor, or stack of electrochemical reactors including i) a catalytic system according to any of the claims 1 to 5 for the production of syngas, **characterized by** comprising a cathode compartment and an anode compartment, a separator and a capillary connecting both compartments, and/or pressure control valves avoiding the build-up of a pressure differential between said compartments.

## Patentansprüche

1. Katalytisches System zur elektrochemischen Reduktion von CO2, umfassend:
a. eine Bimetall-Zink-Kupfer-Kathode mit einem Atomanteil von Zink im Bereich von 28% bis 97%,
die Bimetall Kathode umfasst ferner gegebenenfalls metallische und / oder nichtmetallische Additive in Atomprozentsätzen von 1% oder weniger, wobei die metallischen und / oder nichtmetallischen Additive ausgewählt sind aus Sn, Fe, Pb, ihren Oxiden, Kupferoxiden, Zink Oxide, Si, C und ihre Gemische, und wobei Kupfer und Zink in der Kathode in Form einer festen Lösung, einer Legierung oder von Partikeln vorliegen, einschließlich Nanopartikeln, die auf einem elektrisch leitendem Material aufgetragen sind, wobei die Nanopartikel aus Cu₅Zn₅, CuZn₂ und deren Gemische mit Nanopartikeln aus reinem Kupfer und / oder Nanopartikeln aus reinem Zink sind,
b. ein Elektrolyt auf der Basis einer hydrophilen ionischen Flüssigkeit, der Wasser und gelöstes CO2 enthält und eine einzelne Phase bildet, in der die molare Fraktion der ionischen Flüssigkeit im Bereich von 0.1 bis 0.6 liegt, wobei die ionische Flüssigkeit aus Kationen besteht, die ausgewählt sind aus Imidazolium, Pyridinium, Pyrrolidinium, Phosphonium, Ammonium, Sulfonium, Cholin und Acetylcholin sowie die mit diesen Kationen vorhandenen Anionen ausgewählt sind aus Tetrafluorborat, Chlorid, Bromid, Jodid, Methansulfonat, Acetat, Formiat, Trifluoracetat und Triflat, der Elektrolyt auf der Basis einer ionischen Flüssigkeit, gegebenenfalls ferner umfassend ein organisches Additiv, und der Elektrolyt auf der Basis einer ionischen Flüssigkeit, der an die Bimetall-Zink-Kupfer-Kathode gekoppelt ist, und wobei das katalytische System konfiguriert ist, um Synthesegas mit einem kathodischen Überpotential im Bereich von 0.1 V - 0.7 V bei Temperaturen zwischen Raumtemperatur und 100°C, und Drücken zwischen Atmosphärendruck und 100 bar zu erzeugen.

2. Katalytisches System nach Anspruch 1, wobei die katalytische Kathode Zink und Kupfer mit einem Atomprozentsatz von Zink gleich oder höher als 28% und gleich oder niedriger als 58% enthält, wobei das System konfiguriert ist, um Synthesegas mit einem Molanteil H2/CO zu erzeugen im Bereich von 3 bis 0.5, wobei die Summe der gasförmigen Produkte Wasserstoff und Kohlenmonoxid höher als 95% ist.

3. Katalytisches System nach Anspruch 1, wobei die katalytische Kathode Zink und Kupfer mit einem Atomprozentsatz von Zink gleich oder höher als 58% und gleich oder niedriger als 97% enthält, wobei das System konfiguriert ist, um Synthesegas mit einem Molanteil H2/CO zu erzeugen im Bereich von 0.03 bis 0.1, wobei die Summe der gasförmigen Produkte Wasserstoff und Kohlenmonoxid höher als 95% ist.

4. Katalytisches System nach Anspruch 1, wobei das Imidazolium 1,3 substituiertes Imidazolium mit dem gleichen von verschiedenen Substituenten ist.

5. Katalytisches System nach einem der Ansprüche 1 bis 4, bei dem das organische Additiv aus einem organischen Lösungsmittel wie Acetonitril, Dimethylformamid, Dimethylsulfoxid, Polycarbonaten, Alkylcarbonaten, cyclischen Carbonaten, Aceton, Methanol, Ethanol, Propanol, Butanol, Octanol und seinen Isomeren besteht, oder fluorierte aliphatische Alkohole C₁-C₈ und ihren Isomeren, Polyethylenglykol und Gemische dieser Verbindungen, in denen das Additiv in der ionischen Flüssigkeit in einer Konzentration von weniger als 20 Gew.% und bevorzugter in einer Konzentration von weniger als 5 Gew.% vorhanden ist.

6. Elektrochemischer Hochdruckreaktor oder Stapel elektrochemischer Reaktoren, einschließlich i) eines katalytischen Systems nach einem der Ansprüche 1 bis 5 zur Herstellung von Synthesegas, **gekennzeichnet durch** einen Kathodenraum und einen Anodenraum, einen Separator und eine Kapillare zur Verbindung beider Kammern und / oder Druckregelventile, um den Aufbau eines Druckunterschieds zwischen diesen Kammern zu vermeiden.

## Revendications

1. Système catalytique pour la réduction électrochimique du CO2 comprenant :
a. une cathode bimétallique zinc-cuivre avec un pourcentage atomique du zinc entre 28% et 97%,
la cathode bimétallique en plus optionnellement en plus comprenant des additifs métalliques ou non métalliques à des pourcentages atomiques égal ou inférieur à 1%, parmi lesquels additifs métalliques ou non métalliques sont sélectionnés de Sn, Fe, Pb, leurs oxides, d'oxides de cuivre, d'oxides de zinc, Si, C et leurs mixtures, et
quand cuivre et zinc sont présent dans la cathode en forme d'une solution solide, d'alliage ou de particules, incluant des nanoparticules supporté par un matériel conducteur, nanoparticules étant des nanoparticules de Cu5Zn8, CuZn2 et leurs mixtures avec des nanoparticules de cuivre pur et /ou des nanoparticules de zinc pur,
b. un électrolyte hydrophile, ionique à base liquide contenant de l'eau et du CO2 dissolu formant une phase unique, dans laquelle la fraction molaire du liquide ionique se situe entre 0,1 et 0,6, liquide ionique consistant de cations sélectionnés parmi imidazolium, pyridinium, pyrrolidinium, phosphonium, ammonium, sulfonium, choline et acétylcholine, et les anions en présence de ces cations sélectionné parmi tétrafluoroborate, chlorure, bromure, iodure, méthasulfonate, acétate, formiate, trifluoroacétate et triflate,
l'électrolyte ionique à base liquide optionnellement de plus comprenant un additif organique, et l'électrolyte ionique à base liquide étant couplé à la cathode bimétallique zinc-cuivre mentionnée, et
où le système catalytique est configuré pour produire du gaz de synthèse avec le surpotentiel cathodique dans la fourchette de 0,1V à 0,7V à des températures entre la température ambiante et 100°C, et des pressions entre la pression atmosphérique et 100°C.

2. Système catalytique selon la revendication 1, dans lequel la cathode catalytique contient zinc et cuivre avec un pourcentage de zinc égal ou supérieur à 28% et égal ou inférieur à 58%, dans lequel le système est configuré pour produire du gaz de synthèse dans une proportion molaire H2/Co dans une fourchette de 3 à 0,5, dans lequel la somme des produits gazeux hydrogène et monoxyde de carbone est supérieur à 95%.

3. Système catalytique selon la revendication 1, dans lequel la cathode catalytique contient zinc et cuivre avec un pourcentage de zinc égal ou supérieur à 58% et égal ou inférieur à 97%, dans lequel le système est configuré pour produire du gaz de synthèse dans une proportion molaire H2/Co dans une fourchette de 3 à 0,5, dans lequel la somme des produits gazeux hydrogène et monoxyde de carbone est supérieur à 95%.

4. Système catalytique selon la revendication 1, dans lequel l'imidazolium est 1,3 imidazolium substitué avec le même ou différents substituants.

5. Système catalytique selon la revendication 1 à 4, dans lequel l'additif organique consiste d'un agent solvant, comme l'acétonitrile, le diméthylformamide, le diméthylsulfoxyde, les polycarbonates, les alkylcarbonates, les carbonates cycliques, l'acétone, le méthanol, l'éthanol, le propanol, le butanol, l'octanol et ses isomères, ou les alcools aliphatiques fluorinés C1-C8 et leurs isomères, le polyéthylène glycol et les mixtures de ces composés et dans lequel l'additif mentionné est présent dans le liquide ionique à une concentration de moins de 20% de masse et préférentiellement à une concentration de moins e 5% de masse.

6. Réacteur électrochimique à haute pression, ou pile de réacteurs électrochimiques incluant i) un système catalytique selon l'une ou l'autre des revendications 1 à 5 pour la production de gaz de synthèse, **caractérisée par** l'existence d'un compartiment à cathode et un compartiment à anode, un séparateur et un capillaire connectant les deux compartiments, et / ou des vannes de contrôle de pression sensé éviter l'accumulation d'une différence de pression entre les compartiments mentionnés.
